# EUROPEAN PATENT APPLICATION

(11) **EP 2 145 734 A1**
(43) Date of publication of application: **20.01.2010**
(21) Application number: 09165843.5
(22) Date of filing: 17.07.2009
(51) Int. Cl.: B25B 5/14, B25B 5/16, B23Q 3/06, F01D 5/00

(54) **Vice for withholding a turbine blade**

(30) Priority: 17.07.2008 IT TO20080552
(71) Applicant: ANSALDO ENERGIA S.P.A., 16152 Genova (IT)
(72) Inventor: Grasso, Luciano, 16164 Genova (IT); Vagge, Danilo, 16138 Genova (IT)
(74) Representative: Jorio, Paolo

(57) **Abstract**

A vice (1) for withholding a turbine blade (2) has an arm (35) hinged about a first axis (38); the arm (35) carries a jaw (39), which is provided with a supporting portion (41), fixed with respect to the arm (35), and a resting portion (43) rotating about a second axis (44) transverse with respect to the first axis (38); the arm further carries a connection member (55) for clamping a contact surface (54) of the resting portion against a concave or convex portion (40) of the turbine blade (2).

## Description

The present invention relates to a vice for withholding a turbine blade.

Some turbine blades comprise an aerodynamic profile and two end walls, which are arranged on opposite sides of the aerodynamic profile and, in use, are by the side of end walls of adjacent blades so as to define an annular blade path for a fluid.

In order to machine the end walls, in particular to grind them along the edges, the aerodynamic profile must be clamped by means of vices which act on the concave and/or convex surface.

According to a first known solution, the blade is inserted into and clamped in a first seating having a housing which is shaped so as to be complementary with the shape of the aerodynamic profile, in order to obtain a firm coupling. Such a solution is not satisfactory, because a specific seating needs to be shaped each time for each type of blade. In other words, the obtained seatings may not be used to accurately and firmly clamp the blades belonging to different stages and/or turbines because of differences in shape and/or dimensions of the blades themselves. Furthermore, the method of shaping the seating is rather complex.

According to another known solution, the blade is clamped in a vice the jaws of which carry screws which, when screwed in, abut against the concave and/or convex surfaces of the aerodynamic profile. This solution also has some drawbacks, because the clamping is neither firm nor accurate, and because time is required to tighten the screws in the correct position.

Furthermore, the jaws with the screws are normally cumbersome, whereby causes problems when grinding. Indeed, the head carrying the grinding wheels, once the first end wall of the blade has been machined, must move towards the other end wall and therefore must bypass the jaws, with longer trajectories and times as compared to the possibility of following a direct way, substantially in air distance, from one end wall to the other.

It is the object of the present invention to provide a vice for withholding a turbine blade, which allows to simply and cost-effectively solve the aforementioned problems.

According to the present invention, a vice for withholding a blade of a turbine is provided as defined in claim 1.

The invention will now be described with reference to the accompanying drawings which illustrate a non-limitative embodiment thereof, in which:
- figure 1 is a frontal perspective view of a preferred embodiment of the vice for withholding a turbine blade according to the present invention;
- figure 2 is a different perspective view showing the vice of figure 1 while a turbine blade is clamped; and
- figure 3 partially shows a clamping member of the vice of figure 1 on enlarged scale and with parts in exploded view.

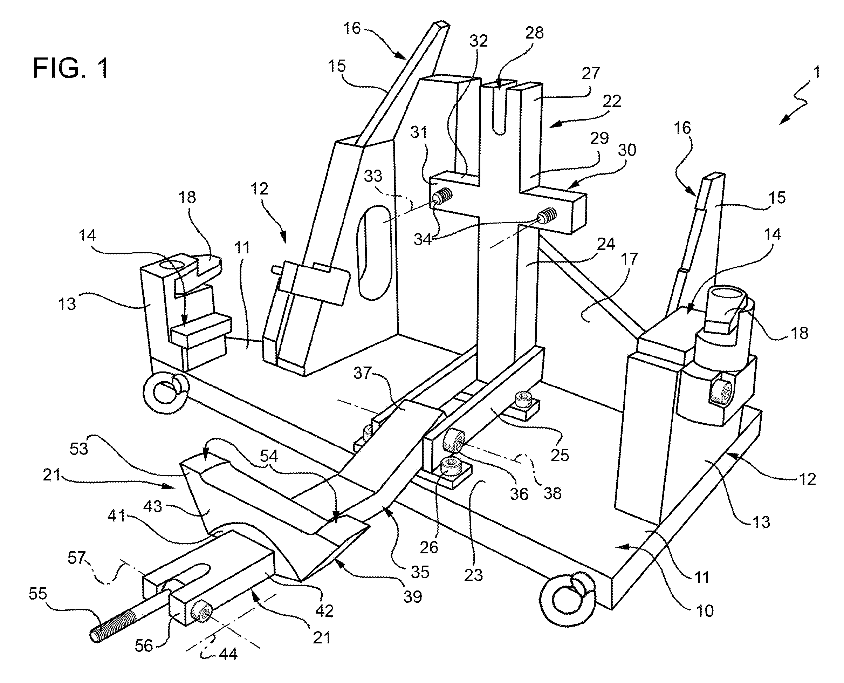

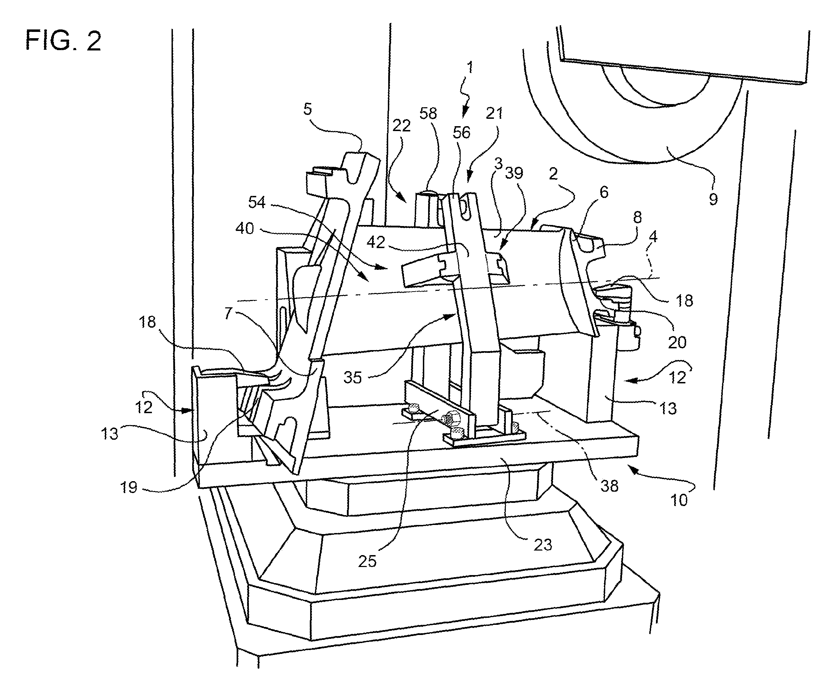

With reference to figures 1 and 2, numeral 1 indicates a vice for withholding a turbine blade 2, which is known per se and comprises an aerodynamic profile 3 extending along a longitudinal axis 4, and two end walls 5,6 arranged on opposite axial parts of profile 3.

The walls 5,6 are to be machined, e.g. they have respective edges 7,8 to be ground by means of a grinding head 9 (partially shown in figure 2), to then be accurately coupled, in use, to end walls of other blades arranged in adjacent positions about the turbine axis and thus form an annular blade path for a fluid.

Vice 1 comprises a base 10 defined by a rectangular horizontal plate, and two resting devices 12 coupled in fixed positions to respective side portions 11 of the base 10.

Each device 12 comprises a block 13 defining a horizontal surface 14 for resting a lower edge of the walls 5,6; and a plate 15 extending so as to protrude upwards and defining an inclined surface 16 for resting a rear edge of the walls 5,6. The plates 15 are joined together by a vertical plate 17 fixed to the base 10 along the rear side. The devices 12 further comprise respective retaining members 18, which are coupled to the blocks 13 so as to move between a release position (figure 1), in which they leave enough space to rest or take the blade 2, and a retaining position, in which they cooperate with respective appendices 19,20 of the walls 5,6 to withhold the walls 5,6 resting against the surfaces 14. The devices 12 are not described in further detail, because their positions, shapes, structures and/or dimensions could be different from those shown in figures 1 and 2, in order to fit to turbine blades other than those shown by way of example in figure 2.

Vice 1 further comprises two clamping members 21,22, which are coupled to an intermediate portion 23 of the base 10 and, in use, releasably hold the profile 3 clamped therebetween.

The clamping member 22 (figure 1) comprises a vertical upright 24 fixed to the rear end of an attachment structure 25, which extends in an horizontal direction which is transversal to the plate 17 and is, in turn, fixed to the portion 23, by means of screws 26. The upright 24 comprises an upper terminal portion 27 having a vertical slit 28; and an intermediate portion 29 in which a crosspiece 30 is fixed.

The clamping member 22 comprises two screws 31, which are screwed through the opposing arms 32 of the crosspiece 30 and extend along horizontal axes 33 parallel to the plane of slit 28. The tips 34 of the screws 31 define a rest for a convex surface of the profile 3 and are adjustable in position by screwing/unscrewing the screws 31.

The clamping member 21, instead, comprises an arm 35, an end 37 of which is directly coupled to the front end of the structure 25 by means of a hinge 36, to make the arm 35 rotating about an axis 38 orthogonal to the plane of slit 28 between lowered and raised positions.

The clamping member 21 further comprises a jaw 39, which cooperates in contact with a concave surface 40 of profile 3 when the arm 35 is in raised position, for clamping the profile 3 against the tips 34 of screws 31. The jaw 39 comprises: a supporting body 41 fixed to an intermediate portion 42 of the arm 35, e.g. by welding; and a resting body 43 adapted to be clamped against the surface 40 and coupled to the body 41 so as to rotate about an axis 44, which is transverse to the axis 38, in particular orthogonal and askew to the axis 38.

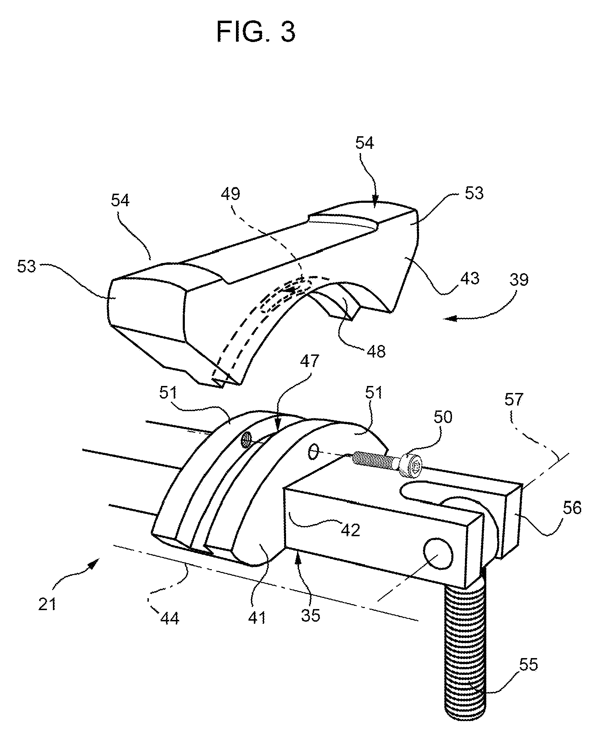

With reference to figure 3, the body 41 defines a guiding groove 47 extending to form an arch about the axis 44 and is slidably engaged by an arched ribbing 48 of the body 43. An intermediate portion of the ribbing 48 has a slot 49, which also extends to form an arch about the axis 44 and is slidably engaged by a retaining, stroke-end pin 50, parallel to the axis 44 and fixed to the sides 51 of the groove 47.

The body 43 comprises two side portions 53 having contact surfaces 54, which are substantially aligned with the tips 34 when the arm 35 is in raised position, are curved with a curving axis substantially parallel to the axis 38, and are complementary in shape with an intermediate portion of the surface 40. The body 43 is made of a milder metal than the material of the piece to be clamped, i.e. profile 3, in order to prevent such a piece form being damaged. In particular, it is made of aluminium.

Finally, the clamping member 21 comprises a connection member 55 carried by the arm 35 to force the surfaces 54 against the surface 40. The member 55 is preferably defined by a threaded pin which is hinged to one end 56 of the arm 35 opposite to the end 37, so as to rotate about an axis 57 parallel to the axis 38 and is inserted into the slit 28 when the arm 35 is in raised position. Under this operative condition, a nut 58 (partially seen in figure 1) is screwed onto the pin 55 against the rear face of the portion 27 to force the arm 35 and, thus, the jaw 39 towards the profile 3 and clamp the blade 2. The nut 58 needs to be unscrewed and the pin 55 and the arm 35 need to be tilted forwards in order to release the blade 2.

While closing the clamping member 21, by virtue of the sliding between the bodies 41 and 43, the position of the surfaces 54 is automatically fitted according to the shape and position of the surface 40, i.e. without needing to make manual adjustments. By virtue of such an adjustment, the clamping member 21 may also be used with blades of different size and/or shape with respect to that shown by way of example, without substantially changing the clamping member 21.

The only modification which could possibly be necessary is to change the curved profile of the surfaces 54 to better adapt it to the specific concavity of the surface against which they should rest. However, such a result may be easily and quickly obtained by replacing the body 43 with another body having appropriate contact surfaces.

From the above it is thus apparent that the clamping member 21 may be used to substantially withhold any type of turbine blade, thus fitting to the concave or convex surface against which the jaw 39 needs to be clamped. In particular, the possibility of rotating the body 43 allows to "centre" the body 43 itself and to make the pressure on the two surfaces 54 uniform and constant.

Furthermore, the clamping member 21 has small dimensions when the arm 35 is in raised position, because the jaw 39 remains at least partially accommodated in the concavity defined by the surface 40 and has no protruding component, e.g. screws to be adjusted, on the face facing the surfaces 54. Therefore, the grinding head 9 is able to travel a relatively short trajectory when needing to pass from one end wall to the other of blade 2.

Furthermore, the position of the pin 55 with respect to the jaw 39 allows to exert an excellent clamping action, as the arm 35 defines a lever of second class.

Finally, from the above, it is apparent that changes and variations may be made to the described vice 1 without departing from the scope of protection of the present invention, as defined in the appended claims.

In particular, the arch-shaped trajectory defined by groove 47 and slot 49 could have a different curvature radius and/or a concavity facing an opposite direction to that shown in the accompanying figures; and/or hinge 36 and pin 55 could be replaced by different connection devices to obtain the same rotation and clamping functions, respectively; and/or the slot 49 could be obtained in the body 41, and the pin 50 fixed to the body 43; and/or the groove 47 could be obtained in the body 43 and the projection defined by the ribbing 48 obtained in the body 41.

## Claims

1. A vice (1) for withholding a turbine blade (2), comprising:
- a base (10) comprising an intermediate portion (23) and two opposed lateral portions (11);
- two resting devices (12) carried by said lateral portions (11) and configured in such a way as to rest thereon respective end walls (5, 6) of a turbine blade (2);
- resting means (34) carried by said intermediate portion (23) and configured in such a way as to enable resting of an aerodynamic profile (3) of said turbine blade (2); and
- a clamping member (21) comprising:
a) an arm (35);
b) hinge means (36) for coupling said arm (35) to said intermediate portion (23) in a rotatable manner about a first axis(38);
c) a jaw (39) comprising:
(1) a supporting portion (41) fixed with respect to said arm (35), and
(2) a resting portion (43) having a contact surface (54) and supported by said supporting portion (41) in a rotatable way about a second axis (44) transverse to said first axis (38);
d) connection means (55) carried by said arm (35) for clamping the aerodynamic profile (3) between said contact surface (54) and said resting means (34).

2. Vice according to claim 1, **characterized in that** said resting means (34) are screw resting means.

3. Vice according to claim 1 or 2, **characterized in that** said connection means (55) and said hinge means (36) are carried by respective ends (56, 37) of said arm (35).

4. Vice according to any one of the preceding claims, **characterized in that** said contact surface (54) is curved with an axis of curvature substantially parallel to said first axis (38).

5. Vice according to any one of the preceding claims, **characterized in that** said contact surface (54) is curved with an axis of curvature substantially parallel to said first axis (38).

6. Vice according to any one of the preceding claims, **characterized in that** one between said supporting portion (41) and said resting portion (43) has a groove (47) having an arched profile, and **in that** the other between said supporting portion (41) and said resting portion (43) comprises a projection (48) slidably engaging said groove (47).

7. Vice according to claim 6, **characterized in that** said projection (48) is an arched ribbing.

8. Vice according to claim 6 or 7, **characterized in that** one between said supporting portion (41) and said resting portion (43) has a slot (49) extending to form an arch about said second axis (44), and **in that** the other between said supporting portion (41) and said resting portion (43) carries, in a fixed position, a pin (50) slidably engaging said slot (49).

9. Vice according to any one of the preceding claims, **characterized in that** the arm (35) of said clamping member (21) is hinged to an attachment structure (25) fixed to said intermediate portion (23) and carrying said screw means (34) via an upright (24).
